# EUROPEAN PATENT APPLICATION

(11) **EP 2 368 853 A1**
(43) Date of publication of application: **28.09.2011**
(21) Application number: 10156527.3
(22) Date of filing: 15.03.2010
(51) Int. Cl.: C02F 1/78

(54) **A fluid treatment apparatus, a fluid treatment system and a method for producing a flow of fluid comprising ozone**

(71) Applicant: Verhoeve Milieu B.V., 3316 LB Dordrecht (NL)
(72) Inventor: Scheffer, Albert Martin, 7021 NR, ZELHEM (NL)
(74) Representative: Fluit, Jeroen

(57) **Abstract**

The invention relates to a fluid treatment apparatus provided with a diffuser, the diffuser comprising a porous wall and an inlet coupled to an ozone tube for providing ozone to the porous wall. The apparatus is constructed to provide in use a flow of fluid along the surface of the porous wall and a flow comprising ozone to the porous wall via the ozone tube. The ozone will be added through the porous wall to the flow of fluid. The apparatus may have a fluid guidance member having an inlet port for letting fluid to be treated into the apparatus and an outlet port for letting treated fluid out of the apparatus and the diffuser is positioned in between the inlet and the outlet.

## Description

The invention relates to a fluid treatment apparatus provided with a diffuser, the diffuser comprising a porous wall and an inlet coupled to an ozone tube for providing ozone to the porous wall.

Fluid treatment apparatus may be used for cleaning fluids, for example, water that is contaminated with various contaminants. The contaminants may be organic contaminants such as hydrocarbons including chlorinated hydrocarbons and aromatic hydrocarbons. The contaminants may be provided to the water during use of the water in a process or the contaminants may be located in the soil and washed out by the water present in the subsurface. Water may be used in the oil and gas industry to fracture the shale deposits in which gas and oil may be recovered. The water may be contaminated with oil residues after fracturing and may need cleaning as well.

An advanced oxidation processes (AOP) may refer to chemical treatment processes designed to remove organic and inorganic materials in waste water by oxidation with: ozone, hydrogen peroxide, oxygen, or air. AOP may be useful for cleaning biologically toxic or nondegradable materials such as aromatics, pesticides, petroleum constituents, and volatile organic compounds in waste water. The contaminant materials may be converted to a large extent into stable inorganic compounds such as water, carbon dioxide and salts. A goal of the waste water purification by means of AOP is the reduction of the chemical contaminants and the toxicity to such an extent that the cleaned waste water may be reintroduced into receiving streams or into a conventional sewage treatment.

EP1021377 discloses a method of cleaning water by injecting a pressurized flow of hydrogen peroxide and ozone into a flow of contaminated water. The hydrogen peroxide and ozone may oxidize the contaminants.

Is an object of the invention to provide an improved fluid treatment apparatus. According to the invention there is provided a fluid treatment apparatus provided with a diffuser, the diffuser comprising a porous wall and an inlet coupled to an ozone tube for providing ozone to the porous wall; wherein the apparatus is constructed to provide in use:
a flow of fluid along the surface of the porous wall; and,
a flow comprising ozone to the porous wall via the ozone tube; and, to add the ozone through the porous wall to the flow of fluid.

According to a further embodiment of the invention there is provided a fluid treatment system comprising:
a reservoir that receives fluid, the reservoir comprising:
   an inlet that receives the fluid;
   at least one chamber; and,
   an outlet to discharge the treated fluid from the reservoir;
a fluid treatment apparatus to produce a fluid flow comprising ozone that is fed into the reservoir, the fluid treatment apparatus is provided with a diffuser, the diffuser comprising a porous wall and an inlet coupled to an ozone tube for providing ozone to the porous wall;
wherein the apparatus is constructed to provide in use:
   a flow of fluid along the surface of the porous wall; and,
   a flow comprising ozone to the porous wall; and, to add the ozone from the porous wall to the flow of fluid.

According to yet a further embodiment of the invention there is provided a method for producing a flow of fluid comprising ozone, the method comprising:
providing a flow of fluid along the surface of a porous wall of a diffuser; and,
providing a flow comprising ozone to the porous wall; and, adding the ozone from the porous wall to the flow of fluid.

Embodiments of the invention will now be described, by way of example only, with reference to the accompanying schematic drawings in which corresponding reference symbols indicate corresponding parts, and in which:
Figure 1 discloses a fluid treatment apparatus according to the invention; and,
Figure 2 discloses a further fluid treatment system according to an embodiment of the invention.

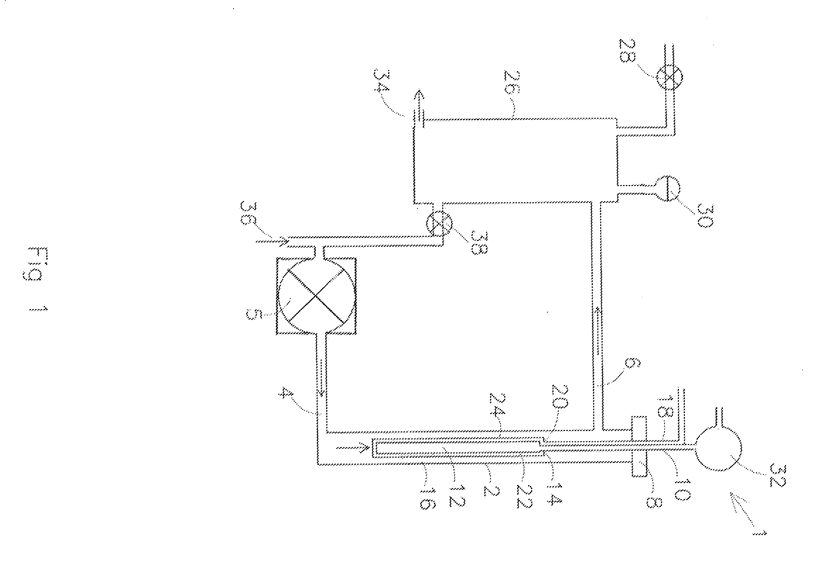

Figure 1 discloses an apparatus according to an embodiment of the invention. The fluid treatment apparatus 1 comprises a casing 2 functioning as a fluid guidance member and having an inlet port 4 for letting fluid (water) to be treated into the casing 2 from a pump 5 and inlet 36 and an outlet port 6 for letting water out of the casing 2 and a portion 8 that receives an ozone tube 10. The apparatus 1 further comprises a diffuser 12, disposed in the casing 2, the diffuser 12 is provided with porous walls, the diffuser 12 is disposed in an axial relationship with an inner surfaces of the casing 2, the diffuser 12 having an inlet 14 coupled to the ozone tube 10. The porous wall may have a pore size diameter that corresponds to a desired bubble size of bubbles that may be released in the flow of fluid from the fluid treatment apparatus. The apparatus further comprises an ozone addition zone 16 between the diffuser 12 and the outer casing 2 for adding of a gas comprising ozone to the water flowing from the inlet 36 to the outlet 6 along the diffuser 12. A hydrogen peroxide tube 18 is provided through the portion 8 that receives the ozone tube 10 and coupled to a second inlet 20 on the diffuser 12 for providing hydrogen peroxide to the diffuser 12. The diffuser 12 has a pore size diameter that corresponds to a desired bubble size of bubbles that in use may be released in the fluid. The diffuser 12 comprises a first porous wall 22 e.g. with a cylindrical shape that receives an ozone tube 10 and a second porous wall 24 e.g. with a cylindrical shape which surrounds the first porous wall 22 that receives between the first and second porous wall a hydrogen peroxide tube 18. The ozone tube may also be provided between the first and second porous wall and the hydrogen peroxide tube may also be provided to the first porous wall. The outer size of the diffuser is approximately in a range of about 0.7 to 0.9 of the inner size of the casing 2. The outer size of the diffuser 12 may preferably be approximately 0.75 of the inner size of the casing 2. The filter may be a micro porous stainless steel or plastic. The pore size diameter of the porous wall of the diffuser 12 may be less than 10 microns. The outlet 6 may be connected to a pressure tank 26 for storing treated fluid for a while. The pressure tank 26 may have a gas relieve valve 28 for allowing gas to escape from the pressure tank 6. The pressure tank may also be provided with a pressure sensor 30. From the pressure tank 26 the fluid may be fed along the diffuser again via valve 38 or it may be clean enough so that it may be discharged in the sewage via tank outlet 34. The ozone in the system may be provided by ozone generator 32 making ozone out of air or oxygen. The apparatus may produce bubbles of ozone coated with hydrogen peroxide which are distributed through the flow of fluid e.g. water. The apparatus may also be used to distribute only ozone or only hydrogenperoxide through the flow of fluid e.g. water.

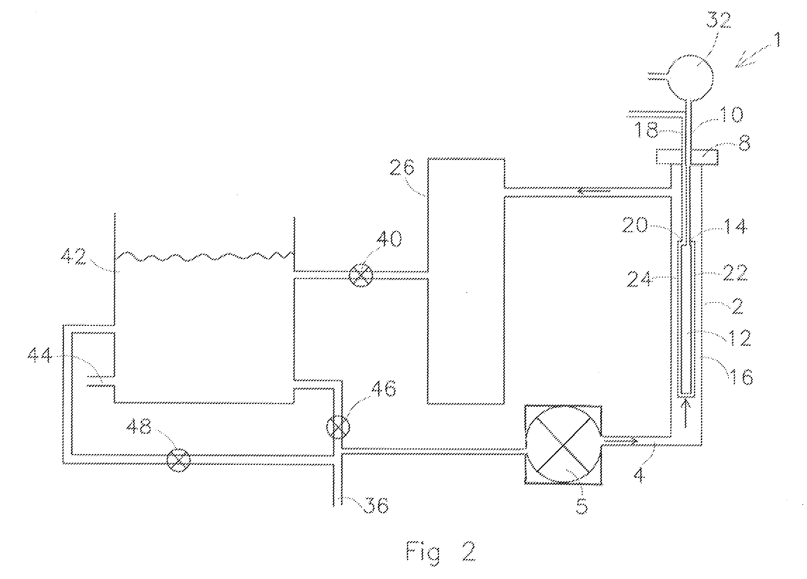

Figure 2 discloses a further system according to an embodiment of the invention. The fluid to be treated may enter the system via inlet 36 and may be directed to the fluid treatment apparatus 1 via pump 5 or may enter the atmospheric reservoir 42 via valve 48. If the fluid enters the fluid treatment device 1 it will be provided with ozone and peroxide as described above with respect to figure 1 at a pressure of for example 3 to 4 bar and via outlet 6 the fluid will be brought to a pressure tank 26. Where it is kept at an alleviated pressure, for example 2 to 3 bar for a while. The fluid can be transported from the pressure tank 26 via valve 40 to an atmospheric reservoir 42 where the gas dissolved in the liquid can escape to the atmosphere. After treatment the fluid can be discharged to the sewage via atmospheric reservoir outlet 44 or may be recirculated in the treatment apparatus 1 via the valve 46 and pump 5. If the fluid is enough clean the fluid (water) may be discharged via outlet 44 to the sewage.

The description are intended to be illustrative, not limiting. Thus it will be apparent to one skilled in the art that modifications may be made to the invention as described without departing from the scope of the claims as set out below.

## Claims

1. A fluid treatment apparatus provided with a diffuser, the diffuser comprising a porous wall and an inlet coupled to an ozone tube for providing ozone to the porous wall; wherein the apparatus is constructed to provide in use:
a flow of fluid along the surface of the porous wall; and,
a flow comprising ozone to the porous wall via the ozone tube; and, to add the ozone through the porous wall to the flow of fluid.

2. The fluid treatment apparatus according to claim 1, wherein the apparatus comprises a fluid guidance member having an inlet port for letting fluid to be treated into the apparatus and an outlet port for letting treated fluid out of the apparatus and the diffuser is positioned in between the inlet and the outlet.

3. The fluid treatment apparatus according to claim 2, wherein the fluid guidance member comprises a casing and the diffuser is disposed within the casing in an axial relationship with an inner surfaces of the casing and the casing forms an ozone addition zone between the diffuser and the casing for adding ozone to the fluid flowing from the inlet to the outlet along the porous wall.

4. The fluid treatment apparatus according to any of the preceding claims, wherein the fluid treatment apparatus comprises:
a hydrogen peroxide tube coupled to a second inlet of the diffuser for providing hydrogen peroxide to the diffuser.

5. The fluid treatment apparatus according to any of the preceding claims, wherein the porous wall has a pore size diameter that corresponds to a desired bubble size of bubbles that may release in the flow of fluid from the fluid treatment apparatus.

6. The fluid treatment apparatus of claim 4, wherein the diffuser comprises a first porous wall that receives a first one of the ozone and hydrogen peroxide tube and a second porous wall surrounding the first porous wall and that receives between the second and the first porous wall a second one of the ozone and hydrogen peroxide tube.

7. The fluid treatment apparatus according to claim 3, wherein the size of the diffuser is approximately in a range of about 0.7 to 0.9 of the inner size of the casing.

8. The fluid treatment apparatus according to claim 3, wherein the size of the diffuser is approximately 0.75 of the inner size of the casing.

9. The fluid treatment apparatus according to any of the preceding claims, wherein the pore size diameter of the porous wall is less than or equal to 10 microns.

10. The fluid treatment apparatus according to any of the preceding claims, wherein the outlet is connected to a pressure tank to store the treated fluid under pressure.

11. The fluid treatment apparatus of claim 10, wherein the pressure tank comprises a gas relieve valve for allowing gas to escape from the pressure tank.

12. A fluid treatment system comprising:
a reservoir that receives fluid, the reservoir comprising:
an inlet that receives the fluid;
at least one chamber; and,
an outlet to discharge the treated fluid from the reservoir;
a fluid treatment apparatus to produce a fluid flow comprising ozone that is fed into the reservoir, the fluid treatment apparatus is provided with a diffuser, the diffuser comprising a porous wall and an inlet coupled to an ozone tube for providing ozone to the porous wall;
wherein the apparatus is constructed to provide in use:
a flow of fluid along the surface of the porous wall; and,
a flow comprising ozone to the porous wall; and, to add the ozone from the porous wall to the flow of fluid.

13. The system of claim 12, wherein the fluid treatment apparatus receives a hydrogen peroxide tube to produce a flow of fluid comprising hydrogen peroxide.

14. The system of claim 12 or 13, wherein the reservoir comprises a plurality of baffled chambers, with at least some of the chambers receiving a flow of fluid comprising ozone from the fluid treatment apparatus.

15. A method for producing a flow of fluid comprising ozone, the method comprising:
providing a flow of fluid along the surface of a porous wall of a diffuser; and,
providing a flow comprising ozone to the porous wall; and, adding the ozone from the porous wall to the flow of fluid.
